# EUROPÄISCHE PATENTSCHRIFT

(11) **EP 2 866 965 B1**
(45) Veröffentlichungstag und Bekanntmachung des Hinweises auf die Patenterteilung: **08.05.2019**
(21) Anmeldenummer: 13747951.5
(22) Anmeldetag: 28.06.2013
(51) Int. Cl.: B23D 57/00, B28D 1/00, B28D 1/08

(54) **FRÄSE**
MILLING CUTTER
FRAISE

(30) Priorität: 28.06.2012 AT 7212012
(43) Veröffentlichungstag der Anmeldung: 06.05.2015
(73) Patentinhaber: Hatzer, Markus, 9972 Virgen (AT)
(72) Erfinder: Hatzer, Markus, 9972 Virgen (AT)
(74) Vertreter: Beer & Partner Patentanwälte KG
(86) Internationale Anmeldenummer: PCT/AT2013/000111
(87) Internationale Veröffentlichungsnummer: WO 2014/000004

(56) Entgegenhaltungen:
- WO-A1-97/48532
- CN-A- 101 502 981
- GB-A- 191 023 918
- GB-A- 191 023 919
- JP-A- 2001 140 475
- JP-A- 2010 234 653

## Beschreibung

Die Erfindung betrifft eine Fräse mit einem Fräskopf zum Abbauen von massiven Werkstücken und gegebenenfalls zum Herauslösen von massiven Werkstücken aus einem zusammenhängenden, übergeordneten Verbund, die eine Führungseinrichtung für ein Antriebsseil aufweist, wobei am Fräskopf das mit Diamantsegmenten versehenes Seil (im Weiteren "Diamantseil") als Antriebsseil und als Fräseinheit geführt ist. Weiters betrifft die Erfindung ein Verfahren zum Abbauen und gegebenenfalls zum Herauslösen von massiven Werkstücken.

Das Einsatzgebiet der Erfindung bezieht sich insbesondere auf den Abbau von Felsen in Natursteinbrüchen sowie auf das Schneiden von größeren armierten Betonfundamenten auf Baustellen. Die Erfindung kann jedoch überall dort zum Einsatz kommen, wo massive Werkstücke durch lange und/oder tiefe Schnitte abgebaut und wo massive Werkstücke (z.B. ein Steinblock) aus einem zusammenhängenden, übergeordneten Verbund (z.B. ein Berg) herausgelöst werden sollen.

Vorrichtungen zum Abbauen von z.B. Felsen mit einem Bohrer und einer Fräse sind aus gattungsgemäßen Vorrichtungen wie aus der GB 23 918 A.D. 1910 A, GB 23 919 A.D. 1910 A und der CN 101 502 981 A bekannt. Die bekannten Fräsen sind über einen Motor und meist ein Winkelgetriebe angetrieben. Nachteilig bei den bekannten Vorrichtungen ist, dass bislang Bohrungen im Gestein durchgeführt werden mussten, um das Gestein abbauen zu können. Nachteilig ist weiterhin, dass die bekannten Vorrichtungen nicht für den Abbau von allen Gesteinsarten und ebenfalls nicht für den Einsatz auf Baustellen, z.B. zum Zerkleinern von armiertem Beton, geeignet sind. GB 23 918 A.D. 1910 A offenbart eine Fräse gemäß dem Oberbegriff des Anspruchs 1.

Der Erfindung liegt die Aufgabe zu Grunde, eine Vorrichtung sowie ein Verfahren der eingangs genannten Gattung zur Verfügung zu stellen, mit welchem der Nachteil des Standes der Technik überwunden wird.

Gelöst wird diese Aufgabe erfindungsgemäß mit einer Fräse, welche die Merkmale des Patentanspruches 1 aufweist.

Zudem wird diese Aufgabe erfindungsgemäß mit einem Verfahren gelöst, welche die Merkmale des Patentanspruches 10 aufweist.

Bevorzugte und vorteilhafte Ausführungsformen der Erfindung sind Gegenstand der Unteransprüche.

Die Erfindung ist dadurch gekennzeichnet, dass die Führungseinrichtung Teleskoparme umfasst, an welchen wenigstens eine Umlenkrolle sowie der Fräskopf, in welchen das Seil geführt ist, angeordnet sind und dass durch die Teleskoparme die räumliche Erstreckung der Fräse, vor allem die Längserstreckung, während sie angetrieben ist veränderbar ist.

Bei der erfindungsgemäßen Fräse dient das Diamantseil als Antriebsseil der Fräse als auch - zusätzlich zum Fräskopf - als Fräseinheit. Besonders vorteilhaft dabei ist, dass mit einem Diamantseil als Antriebsseil und gleichzeitig als Fräseinheit alle Gesteinsarten abgebaut und auch andere Werkstücke, wie zum Beispiel armierter Beton, zerkleinert werden kann. Erfindungsgemäß ist vorgesehen, dass die räumliche Erstreckung der Fräse, vor allem die Längserstreckung, während dem Betrieb der Fräse, d.h. während die Fräse angetrieben ist, veränderbar ist. Somit kann die Fräse flexibel insbesondere auf unterschiedliche Bohrlochtiefen eingestellt werden. Die Fräse weist eine Führungseinrichtung für das Antriebsseil auf und die Führungseinrichtung umfasst Teleskoparme, an denen Umlenkrollen, in welchen das Seil geführt ist, angeordnet sind. Mit diesen Merkmalen wird vorteilhafterweise auch erreicht, dass die Fräse kompakt zum Einsatzgebiet transportiert and vor bzw. während dem Betrieb erst verlängert wird.

Um die räumliche Erstreckung der Fräse verändern zu können, wobei das Diamantseil die gewollte Seilspannung beibehält, kann die Fräse einen Seilspeicher und ggf. einen Seilspanner aufweisen, welche wenigstens zwei Umlenkrollen, in welchen das Seil mehrmals geführt sein kann, aufweisen. Im Rahmen der Erfindung können Seilspeicher und Seilspanner aus derselben Gruppe von Bauteilen gebildet sein. Ein Vorteil des Seilspeichers und/oder -spanners ist auch, dass das Diamantseil für verschiedene Einsatzgrößen der Fräse nicht geöffnet werden muss.

In einer vorteilhaften Ausführungsform der Erfindung ist der Fräskopf mit Diamantsegmenten versehen, um besonders gute Fräseigenschaften im gesamten Einsatzgebiet der Erfindung zu haben. Insbesondere bei dieser Ausführungsform kann vorgesehen sein, dass das Diamantseil im Fräskopf derart in einer Lagerung geführt ist, dass das Diamantseil und die Diamantsegmente am Fräskopf nicht in Kontakt kommen.

In einer weiteren bevorzugten Ausführungsform steht das im Fräskopf geführte Diamantseil in Längsrichtung der Fräse über den Fräskopf hinaus, wobei das Diamantseils dann bereits am Werkstück fräst, bevor der Fräskopf mit dem Werkstück in Verbindung kommt. Alternativ dazu kann das Diamantseil derart im Fräskopf geführt sein, dass es mit dem Fräskopf im Wesentlichen fluchtet, wobei dann das Diamantseil und der Fräskopf im Wesentlichen gleichzeitig fräsen, wenn sie mit dem Werkstück in Kontakt kommen.

Im Rahmen der Erfindung kann der Antrieb ein rein hydraulischer Antrieb oder ein rein elektrischer Antrieb oder ein elektrohydraulischer Antrieb sein.

In einer besonders vorteilhaften Ausführungsform ist die erfindungsgemäße Vorrichtung gekennzeichnet durch eine kombinierte Bohr- und Fräseinheit, die derart auf einer Trägervorrichtung gelagert ist, dass die Einsatzposition des Bohrers und der Fräse in Bezug auf das abzubauende Werkstück ausgetauscht werden kann. Weiters ist erfindungsgemäß vorgesehen, dass eine kombinierte Bohr- und Fräseinheit auf einer Trägervorrichtung in Bezug zu dem abzubauenden Werkstück ausgerichtet wird, dass in das Werkstück ein Bohrloch gebohrt wird, dass die Einsatzposition des Bohrers und der Fräse in Bezug auf das abzubauende Werkstück ausgetauscht wird und dass anschließend die Fräse in das Bohrloch eingeführt wird. Die kombinierte Bohr- und Fräseinheit kann nach dem Bohren und Fräsen auf bzw. durch die Trägervorrichtung in Bezug auf das abzubauende Werkstück versetzt werden, woraufhin an einer anderen Stelle ein weiteres Bohrloch gebohrt und die Fräse in dieses Bohrloch eingeführt wird.

In einer bevorzugten Ausführungsform der Erfindung wird die kombinierte Bohr- und Fräseinheit nach dem Bohren von zwei Bohrlöchern und anschließendem Fräsen auf bzw. durch die Trägervorrichtung in Bezug auf das abzubauende Werkstück versetzt und eine Seilsäge wird in Bezug auf die beiden Bohrlöcher ausgerichtet. Anschließend kann die Breite und die Höhe des Sägeaggregates der Seilsäge in Bezug auf die beiden Bohrlöcher ausgerichtet werden und das Sägeaggregat kann in zwei benachbarte Bohrlöcher eingeführt werden.

In einer besonders bevorzugten Ausführungsform der Erfindung ist vorgesehen, dass die Bohr- und Fräseinheit um eine im Wesentlichen senkrecht zur räumlichen Erstreckung der Trägervorrichtung verlaufenden Achse drehbar auf der Trägervorrichtung gelagert ist. Somit kann, nachdem ein Bohrloch gebohrt wurde, die kombinierte Bohr- und Fräseinheit einfach derart gedreht werden, dass sich die Fräse nun im Wesentlichen an der Position befindet, in der zuvor der Bohrer war.

Im Rahmen der Erfindung kann die Trägervorrichtung ein Trägerfahrzeug, wie z.B. ein Raupenfahrzeug, oder eine sonstige mobile Trägervorrichtung sein. Alternativ dazu kann die Trägervorrichtung Gleissegmente umfassen, wobei die Bohr- und Fräseinheit versetzbar, insbesondere verschiebbar, auf den Gleisen gelagert ist.

Um den Bohrer und die Fräse genau in Bezug auf das abzubauende Werkstück ausrichten zu können, kann unter anderem vorgesehen sein, dass die Fräse und/oder der Bohrer verschwenkbar gelagert sind.

Im Rahmen der Erfindung kann als Bohreinheit je nach dem zu bohrenden Material ein Imlochhammer (drehend-schlagendes Bohren), ein Hartmetallbohrer (drehendes Bohren), ein Diamantbohrer (Kernbohrung), oder dergleichen verwendet werden.

Die erfindungsgemäße Vorrichtung kann auch im Stollen- oder Tunnelvortrieb eingesetzt werden.

Weitere Einzelheiten Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind.

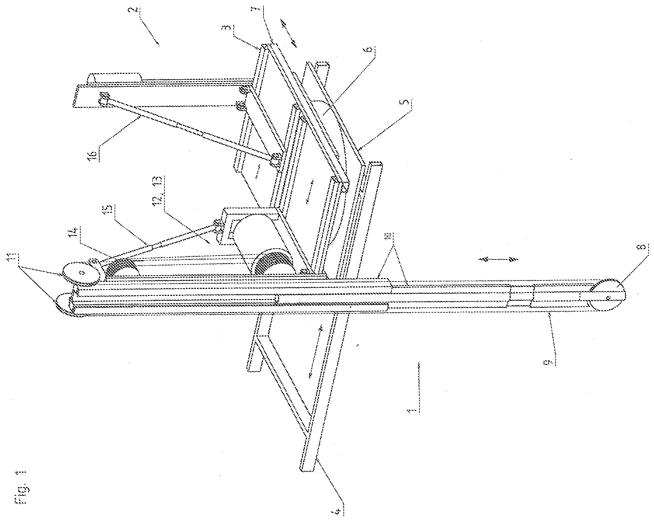

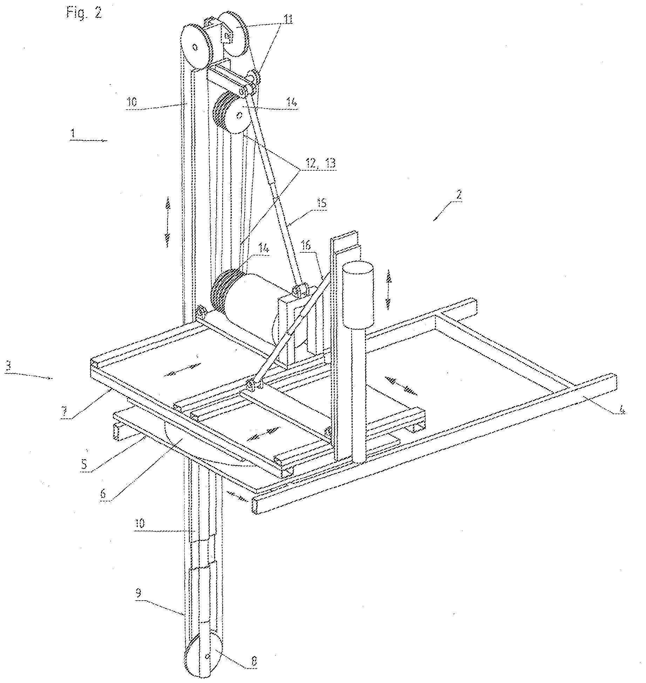

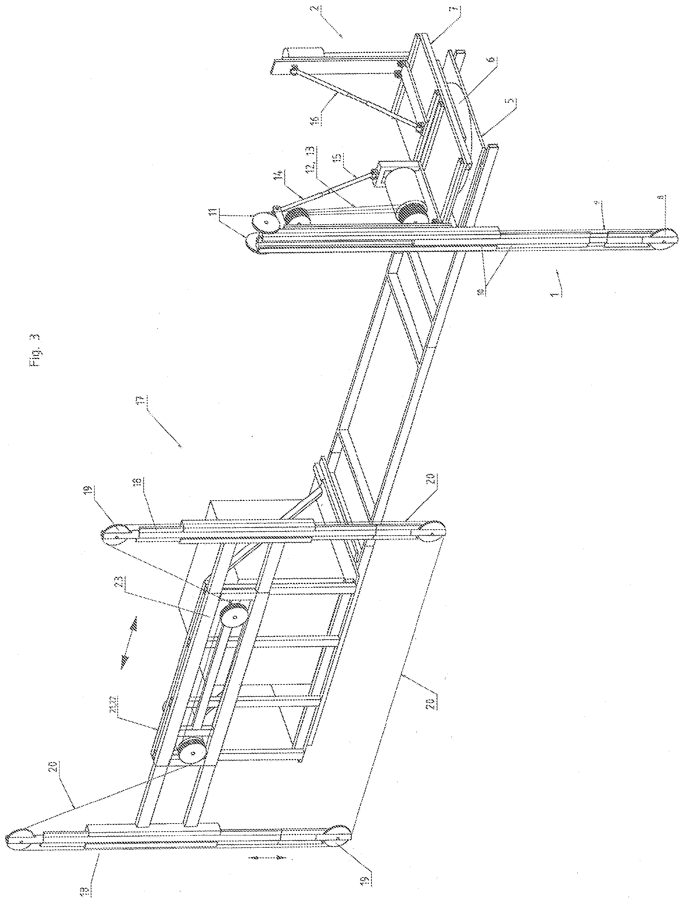

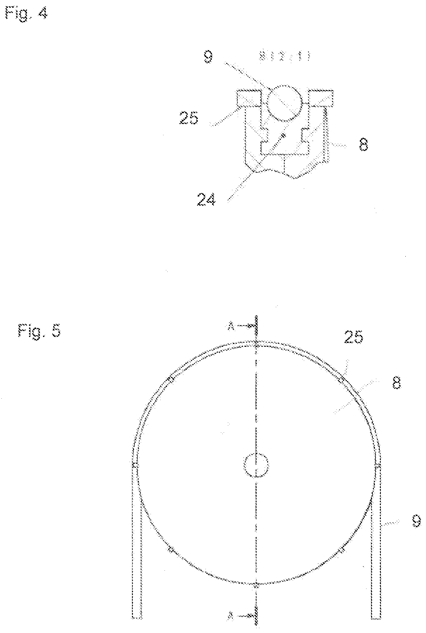

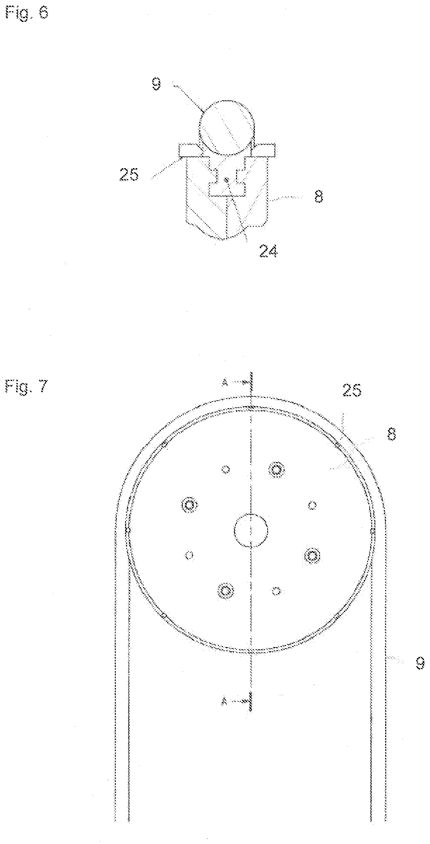

Es zeigt: Fig. 1 und 2 perspektivische Ansichten einer erfindungsgemäßen Vorrichtung mit einer kombinierten Bohr- und Fräseinheit auf einem Gleis als Trägervorrichtung, Fig. 3 eine perspektivische Ansicht einer erfindungsgemäßen Vorrichtung mit einer kombinierten Bohr- und Fräseinheit und einer Seilsäge auf einem Gleis als Trägervorrichtung, Fig. 4 eine mögliche Führung des Diamantseils in einem Fräskopf, Fig. 5 eine Seitenansicht auf den Fräskopf nach Fig. 4, Fig. 6 eine weitere mögliche Führung des Diamantseils in einem Fräskopf und Fig. 7 eine Seitenansicht auf den Fräskopf nach Fig. 6.

In den Fig. 1 und 2 ist eine kombinierte Bohr- und Fräseinrichtung mit einer Fräse 1 und einem Bohrer 2 dargestellt. Fräse 1 und Bohrer 2 sind auf einer Trägervorrichtung 3 angeordnet. Die Trägervorrichtung 3 umfasst im gezeigten Ausführungsbeispiel eine auf Gleisen 4 verschiebbar geführte, erste Trägerplatte 5, einen auf der ersten Trägerplatte 5 angeordneten Drehkranz 6 sowie eine auf dem Drehkranz 6 angeordnete, zweite Trägerplatte 7, an welcher die Fräse 1 und der Bohrer 2 verschiebbar angeordnet sind. Fräse 1 und Bohrer 2 sind über die erste Trägerplatte 5 entlang der Gleise 4 verschiebbar, über den Drehkranz 6 drehbar und auf der zweiten Trägerplatte 7 verschiebbar angeordnet. Möglichkeiten der Verschiebbarkeit von Fräse 1 und Bohrer 2 sind in den Zeichnungen mit einem Doppelpfeil angedeutet. Somit kann die Einsatzposition von Fräse 1 und Bohrer 2 in Bezug auf das abzubauende Werkstück ausgetauscht werden. Fräse 1 und Bohrer 2 sind zudem durch Zylinder 15, 16 verschwenkbar angeordnet.

Die Fräse 1 weist einen Fräskopf 8 auf, an dem ein mit Diamantsegmenten versehenes Seil 9 als Antriebsseil geführt ist. Das Diamantseil 9 ist zusätzlich zum Fräskopf 8 eine Fräseinheit. Die Fräse 1 weist eine Führungseinrichtung für das Diamantseil 9 auf. Die Führungseinrichtung umfasst Teleskoparme 10, an welchen Umlenkrollen 11 sowie der Fräskopf 8, in welchen das Diamantseil 9 geführt ist, angeordnet sind. Durch die Teleskoparme 10 ist die Längserstreckung der Fräse 1 veränderbar, während die Fräse angetrieben ist.

Um die Längserstreckung der Fräse 1 verändern zu können, wobei das Diamantseil 9 die gewollte Seilspannung beibehält, ist ein Seilspeicher 12 und einen Seilspanner 13 vorgesehen, welcher Umlenkrollen 14, in welchen das Diamantseil 9 mehrmals geführt ist, aufweist.

In Fig. 3 sind Fräse 1 und Bohrer 2 mit einer Seilsäge 17 kombiniert. Die Seilsäge 17 weist ein Sägeaggregat umfassend Teleskoparme 18 auf, an denen Umlenkrollen 19, in welchen ein Sägeseil 20, insbesondere ein Diamantseil, geführt ist, angeordnet sind. Um die räumliche Erstreckung der Seilsäge 17, vorzugsweise die Schneidbreite und die Schneidhöhe, verändern zu können, wobei das Sägeseil 20 die gewollte Seilspannung beibehält, ist ein Seilspeicher 21 und einen Seilspanner 22 vorgesehen, welcher Umlenkrollen 23, in welchen das Sägeseil 20 mehrmals geführt ist, aufweist.

Der Einsatz der erfindungsgemäßen Vorrichtung kann beispielsweise wie folgt dargestellt werden:
Im Bereich der abzubauenden und herauszulösenden Werkstücke werden Gleise 4 aufgelegt und mit einer Wasserwaage ausgerichtet. Anschließend werden die Bohr- und Fräseinrichtung auf die Gleise 4 gehoben. Der Bohrer 2 wird zur Schnittrichtung geschwenkt, auf die benötigte Position des Bohrloches gefahren und genau ausgerichtet. Das Bohrloch kann nun mittels des Bohrers 2 in die gewünschte Tiefe getrieben werden.

Anschließend wird die Fräse 1 zum Bohrloch geschwenkt und genau auf das Bohrloch eingestellt. Die Fräse 1 mit einem angetriebenen Diamantseil 9, welches die Fräse 1 zum einen antreibt und zum anderen neben dem Fräskopf selber fräsende Wirkung hat, fräst nun unter Zuführen von Kühlwasser einen klar in der Breite und Länge definierten Schacht bis zum Bohrlochtiefsten, wobei die Längserstreckung der Fräse bis zum Bohrlochtiefsten verändert wird. Das Bohrloch dient dabei als Führung und Abfluss des kühl und Schlammwassers. Bei Vertikalbohrungen muss eine Horizontalbohrung durchgeführt werden, um den Abfluss zu garantieren. Diese Bohrung bzw. dieser Schacht wird, zusammen mit einer weiteren Bohrung, für den weiteren Abbau mittels einer mobilen Seilsäge benötigt.

Die Fräse 1 wird herausgefahren. Die Vorrichtung umfassend den Bohrer 2 und die Fräse 1 fährt nun über die Gleise zum zweiten gewünschten Bohr- und Fräspunkt. Ist die Bohrung und Abschachtung beendet, fährt die kombinierte Bohr- und Fräseinrichtung zur Seite und die Abbauseilsäge (Eintauchseilsäge) wird auf das Gleis 4 gehoben bzw. auf dem Gleis verfahren. Die Seilsäge wird zum gewünschten Schnittpunkt gefahren und genau auf die zwei Bohrlöscher bzw. Schächte ausgerichtet. Die Teleskoparme 18 der Seilsäge 17 werden in die Bohrlöcher eingeführt und die Seilsäge 17 beginnt nun mittels des Diamantseils 20 den Abschlag zwischen den zwei Schächten bis zum Schachttiefsten unter Zuführen von Kühlwasser herauszusägen, d.h. herauszulösen.

Während der erste Steinblock durch die Säge 17 herausgelöst wird, beginnt die kombinierte Bohr- und Fräseinrichtung bereits mit den nächsten Bohrlöchern bzw. Schächten. So fährt die kombinierte Bohr- und Fräseinrichtung der Seilsäge 17 immer voraus und die Seilsäge 17 folgt auf dem selben Gleis. Hat die Seilsäge 17 ihren Schnitt beendet fährt sie auf dem Gleis zu den nächsten Bohrlöchern bzw. Schächten und das letzte Gleissegment kann hinter der Seilsäge 17 abgebaut und vor der kombinierten Bohr- und Fräseinrichtung wieder angebaut werden.

In den Fig. 4 und 5 ist eine mögliche Führung des Diamantseils 9 in einem Fräskopf 7 dargestellt, wobei Fig. 4 ein vergrößerter Ausschnitt des Fräskopfes 7 entlang dem Schnitt AA aus Fig. 5 darstellt. Das Diamantseil 9 ist in diesem Ausführungsbeispiel in einem im Fräskopf 7 angeordnetem Polyamidlaufring 24 geführt und steht knapp über den Fräskopf 7 hinaus. Der Fräskopf 7 ist um seinen Umfang mit Diamantsegmenten 25 versehen. Das Diamantseil 9 ist in einem Abstand zu den Diamantsegmenten 25 am Fräskopf 7 geführt.

In den Fig. 6 und 7 ist eine weitere Führung des Diamantseils 9 in einem Fräskopf 7 dargestellt, wobei Fig. 6 ein vergrößerter Ausschnitt des Fräskopfes 7 entlang dem Schnitt AA aus Fig. 7 darstellt. Das Diamantseil 9 ist in diesem Ausführungsbeispiel in einem im Fräskopf 7 angeordnetem Polyamidlaufring 24 geführt und steht größtenteils über den Fräskopf 7 hinaus. Der Fräskopf 7 ist um seinen Umfang mit Diamantsegmenten 25 versehen. Das Diamantseil 9 ist in einem Abstand zu den Diamantsegmenten 25 am Fräskopf 7 geführt.

## Patentansprüche

1. Fräse mit einem Fräskopf (8) zum Abbauen von massiven Werkstücken, wie Felsen oder Betonfundamente, die eine Führungseinrichtung für ein Antriebsseil (9) aufweist, wobei am Fräskopf (8) das mit Diamantsegmenten versehene Seil (9) als Antriebsseil und als Fräseinheit geführt ist, **dadurch gekennzeichnet, dass** die Führungseinrichtung Teleskoparme (10) umfasst, an welchen wenigstens eine Umlenkrolle (11) sowie der Fräskopf (8), in welchen das Seil (9) geführt ist, angeordnet sind und dass durch die Teleskoparme (10) die räumliche Erstreckung der Fräse, vor allem die Längserstreckung, während sie angetrieben ist veränderbar ist.

2. Fräse nach Anspruch 1, **dadurch gekennzeichnet, dass** sie einen Seilspeicher (12) und/oder einen Seilspanner (13) aufweist, insbesondere, dass der Seilspeicher (12) und/oder der Seilspanner (13) wenigstens zwei Umlenkrollen (14), in welchen das Seil (9) mehrmals geführt ist, aufweist, wobei vorzugsweise Seilspeicher (12) und Seilspanner (13) aus derselben Gruppe von Bauteilen gebildet ist.

3. Fräse nach Anspruch 1 oder 2, **dadurch gekennzeichnet, dass** der Fräskopf (8) mit Diamantsegmenten (25) versehen ist, wobei vorzugweise das Seil (9) am Fräskopf (8) im Abstand zu den Diamantsegmenten (25) am Fräskopf (8) geführt ist.

4. Fräse nach einem der Ansprüche 1 bis 3, **dadurch gekennzeichnet, dass** das im Fräskopf (8) geführte Diamantseil (9) über den Fräskopf (8) hinaus steht oder das Diamantseil (9) mit dem Fräskopf (8) im Wesentlichen fluchtet.

5. Fräse nach einem der Ansprüche 1 bis 4, **dadurch gekennzeichnet, dass** der Antrieb für das Antriebsseil (9) ein hydraulischer und/oder elektrischer Antrieb ist.

6. Vorrichtung zum Abbauen von massiven Werkstücken, wie Felsen oder Betonfundamente, **dadurch gekennzeichnet, dass** sie eine Fräse (1) nach einem der Ansprüche 1 bis 5 und einen Bohrer (2) aufweist, die derart auf einer Trägervorrichtung gelagert sind, dass die Einsatzposition des Bohrers (2) und der Fräse (1) in Bezug auf das abzubauende Werkstück ausgetauscht werden kann.

7. Vorrichtung nach Anspruch 6, **dadurch gekennzeichnet, dass** der Bohrer (2) und die Fräse (1) um eine im Wesentlichen senkrecht zur räumlichen Erstreckung der Trägervorrichtung verlaufenden Achse drehbar auf der Trägervorrichtung gelagert sind.

8. Vorrichtung nach Anspruch 6 oder 7, **dadurch gekennzeichnet, dass** der Bohrer (2) und die Fräse (1) versetzbar, insbesondere verschiebbar, auf der Trägervorrichtung gelagert sind und dass insbesondere die Fräse (1) und/oder der Bohrer (2) verschwenkbar gelagert sind.

9. Vorrichtung nach einem der Ansprüche6 bis 8, **dadurch gekennzeichnet, dass** sie eine Seilsäge (17) aufweist und dass die Seilsäge (17) vorzugsweise einen Seilspeicher (21) und/oder die Seilsäge (17) ein Sägeaggregat umfassend Teleskoparme (18) aufweist, an denen Umlenkrollen (19), in welchen ein Sägeseil (20) geführt ist, angeordnet sind.

10. Verfahren zum Abbauen von massiven Werkstücken, wie Felsen oder Betonfundamente, **dadurch gekennzeichnet, dass** eine Fräse (1) nach einem der Ansprüche 1 bis 5, durch ein mit Diamantsegmenten versehenes Antriebsseil (9) angetrieben wird, dass mit dem Antriebsseil (9) gefräst wird und dass die räumliche Erstreckung der Fräse (1) während die Fräse (1) angetrieben wird verändert wird.

11. Verfahren nach Anspruch 10, **dadurch gekennzeichnet, dass** die Fräse (1) und ein Bohrer (2) auf einer Trägervorrichtung in Bezug zu dem abzubauenden Werkstückausgerichtet werden, dass in das Werkstück ein Bohrloch gebohrt wird, dass die Einsatzposition des Bohrers (2) und der Fräse (1) in Bezug auf das abzubauende Werkstück ausgetauscht wird und dass weiters Teile der Fräse (1) in das Bohrloch eingeführt werden und dass insbesondere der Bohrer (2) und die Fräse (1) nach dem Bohren und Fräsen auf bzw. durch die Trägervorrichtung in Bezug auf das abzubauende Werkstück versetzt wird und ein weiteres Bohrloch gebohrt und die Fräse (1) in dieses Bohrloch eingeführt wird.

12. Verfahren nach Anspruch 11, **dadurch gekennzeichnet, dass** der Bohrer (2) und die Fräse (1) nach dem Bohren von zwei Bohrlöchern und anschließendem Fräsen auf der bzw. durch die Trägervorrichtung in Bezug auf das abzubauende Werkstück versetzt werden und dass eine Seilsäge (17) in Bezug auf die beiden Bohrlöcher ausgerichtet wird und dass insbesondere die Breite und Höhe des Sägeaggregates der Seilsäge (17) in Bezug auf die beiden Bohrlöcher ausgerichtet wird.

13. Verfahren nach Anspruch 12, **dadurch gekennzeichnet, dass** das Sägeaggregat Teleskoparme (18) aufweist, an denen Umlenkrollen (19), in welchen das Sägeseil (20) geführt ist, angeordnet sind, und dass Teleskoparme (18) der Seilsäge in zwei benachbarte Bohrlöcher eingeführt werden.

## Claims

1. Milling cutter with a milling head (8) for cutting off solid workpieces such as stone or concrete foundations, which milling cutter has a guide device for a drive cable (9), wherein the cable (9) provided with diamond segments is guided at the milling head (8) as a drive cable and as a milling unit, **characterised in that** the guide device comprises telescopic arms (10), on which at least one guide pulley (11) and the milling head (8), in which the cable (9) is guided, are arranged, and **in that** the spatial extent of the milling cutter, particularly the longitudinal extent, can be changed by the telescopic arms (10) whilst the milling cutter is being driven.

2. Milling cutter according to claim 1, **characterised in that** it has a cable store (12) and/or a cable tensioner (13), in particular **in that** the cable store (12) and/or the cable tensioner (13) have/has at least two guide pulleys (14), in which the cable (9) is guided a number of times, wherein the cable store (12) and the cable tensioner (13) preferably are formed from the same group of components.

3. Milling cutter according to claim 1 or 2, **characterised in that** the milling head (8) is provided with diamond segments (25), wherein the cable (9) is preferably guided at the milling head (8) at a distance from the diamond segments (25) on the milling head (8).

4. Milling cutter according to any one of claims 1 to 3, **characterised in that** the diamond cable (9) guided in the milling head (8) protrudes beyond the milling head (8), or the diamond cable (9) is substantially flush with the milling head (8).

5. Milling cutter according to any one of claims 1 to 4, **characterised in that** the drive for the drive cable (9) is a hydraulic and/or electric drive.

6. Device for cutting off solid workpieces such as stone or concrete foundations, **characterised in that** said device has a milling cutter (1) according to any one of claims 1 to 5 and a drill (2), these being mounted on a carrier device in such a way that the use position of the drill (2) and of the milling cutter (1) in relation to the workpiece to be milled off can be swapped.

7. Device according to claim 6, **characterised in that** the drill (2) and the milling cutter (1) are mounted on the carrier device so as to be rotatable about an axis running substantially perpendicular to the spatial extent of the carrier device.

8. Device according to claim 6 or 7, **characterised in that** the drill (2) and the milling cutter (1) are mounted movably, in particular slidably, on the carrier device, and **in that** in particular the milling cutter (1) and/or the drill (2) are mounted pivotably.

9. Device according to any one of claims 6 to 8, **characterised in that** it has a cable saw (17), and **in that** the cable saw (17) preferably has a cable store (21) and/or the cable saw (17) preferably has a sawing apparatus comprising telescopic arms (18), on which guide pulleys (19), in which a saw cable (20) is guided, are arranged.

10. Method for cutting off solid workpieces such as stone or concrete foundations, **characterised in that** a milling cutter (1) according to any one of claims 1 to 5, is driven by a drive cable (9) provided with diamond segments, **in that** milling is performed with the drive cable (9), and **in that** the spatial extent of the milling cutter (1) is changed whilst the milling cutter (1) is being driven.

11. Method according to claim 10, **characterised in that** the milling cutter (1) and a drill (2) on a carrier device are oriented relative to the workpiece to be cut off, **in that** a borehole is drilled into the workpiece, **in that** the use position of the drill (2) and of the milling cutter (1) in relation to the workpiece to be milled off is swapped, and **in that**, furthermore, parts of the milling cutter (1) are introduced into the borehole, and **in that** in particular the drill (2) and the milling cutter (1), after the drilling and milling on and through the carrier device, are moved in relation to the workpiece to be cut off and a further borehole is drilled, and the milling cutter (1) is introduced into said borehole.

12. Method according to claim 11, **characterised in that** the drill (2) and the milling cutter (1), after the drilling of two boreholes and subsequent milling on and through the carrier device, are moved in relation to the workpiece to be cut off, and **in that** a cable saw (17) is aligned with the two boreholes, and **in that** in particular the width and height of the sawing apparatus of the cable saw (17) are aligned with the two boreholes.

13. Method according to claim 12, **characterised in that** the sawing apparatus has telescopic arms (18), on which guide pulleys (19), in which the sawing cable (20) is guided, are arranged, and **in that** telescopic arms (18) of the cable saw are introduced into two adjacent boreholes.

## Revendications

1. Fraiseuse avec une tête de fraisage (8) pour l'abattage de pièces massives telles que des rochers ou des fondations en béton, qui présente une installation de guidage pour un câble d'entraînement (9), le câble (9) muni de segments diamantés étant guidé sur la tête de fraisage (8) pour servir de câble d'entraînement et d'unité de fraisage, **caractérisée en ce que** l'installation de guidage comprend des bras
télescopiques (10) sur lesquels sont disposés au moins un galet de renvoi (11) et la tête de fraisage (8) dans laquelle passe le câble (9), et **en ce que** l'emprise dans l'espace de la fraiseuse, en particulier son emprise longitudinale, peut être modifiée par les bras télescopiques (10) pendant qu'elle est entraînée.

2. Fraiseuse selon la revendication 1, **caractérisée en ce qu'**elle présente un magasin de câble (12) et/ou un tendeur de câble (13), et notamment **en ce que** le magasin de câble (12) et/ou le tendeur de câble (13) présentent au moins deux galets de renvoi (14) dans lesquels le câble (9) passe plusieurs fois, le magasin de câble (12) et le tendeur de câble (13) étant formés de préférence par le même groupe de composants.

3. Fraiseuse selon la revendication 1 ou 2, **caractérisée en ce que** la tête de fraisage (8) est munie de segments diamantés (25), le câble (9) passant de préférence sur la tête de fraisage (8) à distance des segments diamantés (25) de la tête de fraisage (8).

4. Fraiseuse selon l'une des revendications 1 à 3, **caractérisée en ce que** le câble diamanté (9) passant dans la tête de fraisage (8) dépasse au-delà de la tête de fraisage (8) ou bien le câble diamanté (9) est sensiblement aligné sur la tête de fraisage (8).

5. Fraiseuse selon l'une des revendications 1 à 4, **caractérisée en ce que** l'entraînement du câble d'entraînement (9) est un entraînement hydraulique et/ou électrique.

6. Dispositif pour l'abattage de pièces massives telles que des rochers ou des fondations en béton, **caractérisé en ce qu'**il comporte une fraiseuse (1) selon l'une des revendications 1 à 5 et une foreuse (2), qui sont supportées sur un dispositif porteur de telle manière que les positions d'utilisation de la foreuse (2) et de la fraiseuse (1) par rapport à la pièce à abattre puissent être interverties.

7. Dispositif selon la revendication 6, **caractérisé en ce que** la foreuse (2) et la fraiseuse (1) sont supportées sur le dispositif porteur avec possibilité de rotation sur un axe sensiblement perpendiculaire à l'emprise dans l'espace du dispositif porteur.

8. Dispositif selon la revendication 6 ou 7, **caractérisé en ce que** la foreuse (2) et la fraiseuse (1) sont supportées sur le dispositif porteur avec possibilité de déplacement, en particulier de translation, et **en ce que** la fraiseuse (1) et/ou la foreuse (2) sont en particulier supportées de façon pivotante.

9. Dispositif selon l'une des revendications 6 à 8, **caractérisé en ce qu'**il comporte une scie à câble (17) et **en ce que** la scie à câble (17) comporte de préférence un magasin de câble (21) et/ou la scie à câble (17) comporte un groupe de sciage qui comprend des bras télescopiques (18) sur lesquels sont disposés des galets de renvoi (19) dans lesquels passe un câble de sciage (20).

10. Procédé pour l'abattage de pièces massives telles que des rochers ou des fondations en béton, **caractérisé en ce qu'**une fraiseuse (1) selon l'une des revendications 1 à 5 est entraînée par un câble d'entraînement (9) muni de segments diamantés, **en ce que** le fraisage est réalisé avec le câble d'entraînement (9) et **en ce que** l'emprise dans l'espace de la fraiseuse (1) est modifiée pendant que la fraiseuse (1) est entraînée.

11. Procédé selon la revendication 10, **caractérisé en ce que** la fraiseuse (1) et une foreuse (2) sont orientées sur un dispositif porteur par rapport à la pièce à abattre, **en ce qu'**un trou est foré dans la pièce, **en ce que** les positions d'utilisation de la foreuse (2) et de la fraiseuse (1) sont interverties par rapport à la pièce à abattre et **en ce que** des parties de la fraiseuse (1) sont en outre introduites dans le trou foré et en particulier que la foreuse (2) et la fraiseuse (1) sont décalées sur ou par le dispositif porteur par rapport à la pièce à abattre après le forage et le fraisage, un autre trou est foré et la fraiseuse (1) est introduite dans ce trou foré.

12. Procédé selon la revendication 11, **caractérisé en ce que** la foreuse (2) et la fraiseuse (1) sont déplacées sur ou par le dispositif porteur par rapport à la pièce à abattre après le forage de deux trous puis le fraisage et **en ce qu'**une scie à câble (17) est orientée par rapport aux deux trous forés et **en ce que** la largeur et la hauteur du groupe de sciage de la scie à câble (17), en particulier, sont orientées par rapport aux deux trous forés.

13. Procédé selon la revendication 12, **caractérisé en ce que** le groupe de sciage comporte des bras télescopiques (18) sur lesquels sont disposés des galets de renvoi (19) dans lesquels passe un câble de sciage (20), et **en ce que** des bras télescopiques (18) de la scie à câble sont introduits dans deux trous forés voisins.
